(19) Europäisches Patentamt
European Patent Office
Office européen des brevets

(11) Publication number: 0 067 583
A2

(12) EUROPEAN PATENT APPLICATION

(21) Application number: 82302736.2

(22) Date of filing: 27.05.82

(51) Int. Cl.$^3$: C 22 B 60/02
B 01 D 11/04

(30) Priority: 15.06.81 US 273740

(43) Date of publication of application:
22.12.82 Bulletin 82/51

(84) Designated Contracting States:
BE DE FR GB IT

(71) Applicant: Exxon Research and Engineering Company
P.O.Box 390 180 Park Avenue
Florham Park New Jersey 07932(US)

(72) Inventor: Valint, Paul Louis, Jr.
RD No. 1, Box 248 Bellwood Park Road
Asbury New Yersey 08802(US)

(74) Representative: Field, Roger Norton et al,
ESSO Engineering (Europe) Ltd. Patents & Licences
Apex Tower High Street
New Malden Surrey KT3 4DJ(GB)

# (54) A liquid membrane process for uranium recovery.

(57) A liquid membrane emulsion extraction process for recovering uranium from a WPPA feed solution containing U(IV) cations wherein said feed is contacted with a water-in-oil emulsion which extracts and captures the uranium in interior aqueous phase thereof, there being an alkane diphosphonic acid uranium complexing agent in the interior phase of the emulsion.

EP 0 067 583 A2

Croydon Printing Company Ltd.

# A LIQUID MEMBRANE PROCESS FOR URANIUM RECOVERY

Recovering uranium as a by-product from Wet Process Phosphoric Acid is well-known in the art. Phosphate rock is mined primarily to produce a high-phosphate containing fertilizer, the first step of which involves digesting the rock in sulfuric acid to produce a phosphoric acid solution which is known in the art as Wet Process Phosphoric Acid (WPPA). The WPPA contains uranium which can be recovered before the acid is further processed for making fertilizer. In known processes for recovering uranium from WPPA, the uranium is extracted from the WPPA by contacting the WPPA with an extractant which is an oily, water-immiscible material comprising a suitable uranium extractant dissolved in an oily, organic liquid such as kerosene. The amount of uranium that the oily extractant can contain is limited by equilibrium conditions. This is quite low and is generally less than one gram of uranium per liter of extractant. The uranium-enriched extractant is then separated from the WPPA and contacted with an aqueous solution containing a reducing or oxidizing agent depending on whether one is extracting U(VI) or U(IV) ions from the WPPA.

F. J. Hurst and D. J. Crouse (Recovery of Uranium from Wet-Process Phosphoric Acid by Extraction with Octylphenylphosphoric Acid, Ind. Eng. Chem., Process, Des. Develop., v. 13, n. 3, p. 286-291 (1974) disclose a process for recovering uranium from WPPA wherein the uranium is in the WPPA as tetravalent U(IV) ions and the extractant is an octylphenylphosphoric acid mixture (OPPA). Extracting efficiencies are disclosed as ranging from 2-37. It has recently been discovered that one can use a liquid membrane emulsion extraction process for recovering uranium from WPPA which processes comprises contacting a uranium-containing WPPA feed with globules of

a water-in-oil emulsion comprising microdroplets of an aqueous interior phase dispersed in an oily, continuous exterior phase containing at least one transfer agent for selectively transferring the uranium from the feed into the interior phase of the emulsion wherein the valence of the uranium species is changed, thereby trapping the uranium in the emulsion. The uranium-enriched emulsion is then separated from the feed, the emulsion is broken and the uranium is recovered. In one embodiment of this process, the uranium is present in the WPPA as tetravalent U(IV) ions and the exterior or membrane phase of the emulsion contains OPPA as the U(IV) transfer agent.

It has now been discovered that a liquid membrane process may be used to recover U(IV) ions from a WPPA feed containing same without the need to change the oxidation state of the uranium in the internal, aqueous phase of the emulsion, if said aqueous phase contains an alkane diphosphonic acid uranium complexing agent. Thus, the present invention is a process for recovering uranium from an aqueous feed solution containing U(IV) cations wherein said process comprises the steps of:

(a) contacting said feed with a water-in-oil emulsion comprising (i) an aqueous interior phase containing a uranium complexing agent comprising an alkane diphosphonic acid dispersed in (ii) an oily surfactant-containing exterior phase immiscible with both the interior phase and said feed, said exterior phase containing at least one transfer agent to transport the U(IV) cations from said feed into the interior phase of the emulsion wherein said uranium complexing agent forms a complex with said U(IV) cations to trap said U(IV) cations in said interior phase to form a uranium-rich emulsion and a uranium-reduced feed solution;

(b) separating the uranium-rich emulsion from the feed solution; and

(c) recovering uranium from the emulsion.

It is important to note that the valence of the U(IV) ion is not changed, in the interior phase of the emulsion. The U(IV) ions are trapped in the interior phase of the emulsion as a complex which does not transfer out of the interior phase back into the feed.

The alkane diphosphonic complexing agent will preferably have the formula:

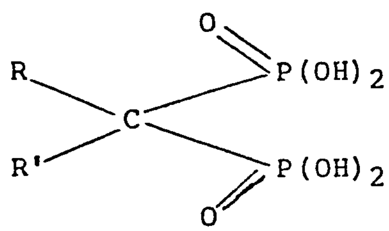

wherein R is hydrogen or a 1 to 4 carbon atom alkyl group and R' is hydrogen or hydroxyl. A particularly preferred uranium complexing agent is ethane-1-hydroxyl-1, 1-diphosphonic acid (EHDP) wherein R is a methyl group and R' is hydroxyl. The amount of complexing agent present in the internal phase of the emulsion will generally range from about 1/2 - 2 and preferably from about 3/4 - 1 1/4 molar.

The process of this invention has been found to have extraction efficiencies ranging from about 650 to 1150. When using the process of this invention, extraction efficiency means the ratio of the concentration of uranium in the internal phase of the emulsion to the concentration of the uranium remaining in the WPPA feed. Thus, the process of this invention can operate at temperatures limited only to the stability of the emulsion. Thus, it is suitable for use at temperatures ranging from about 20°C to 100°C. A more preferred temperature range from extracting the uranium from the WPPA is from about 40 to 85°C. The higher the temperature the more efficient is the extraction of the uranium from the feed, the temperature being limited only by the stability of the emulsion.

In a preferred embodiment of this invention the

feed will be WPPA containing uranium as tetravalent U(IV) cations, the exterior phase of the emulsion will contain a U(IV) transfer agent such as octylphenyl-phosphoric acid (OPPA) in a surfactant-containing aliphatic hydrocarbon and the interior phase of the emulsion will be a phosphoric acid solution containing EHDP. The OPPA in the exterior phase transports the U(IV) cations from the WPPA feed into the interior phase of the emulsion wherein the uranium is stripped from the OPPA by the phosphoric acid and is trapped in the interior phase of the emulsion by forming a complex with the EHDP.

Essential to the successful operation of the process of this invention is a suitable water-in-oil type of emulsion. It has been discovered that emulsions of the type disclosed in U.S. 3,779,907, the disclosures of which are incorporated herein by reference, are suitable for use in the process of this invention. These emulsions are referred to by those knowledgeable in the art as liquid membrane emulsions. Thus, the water immiscible exterior phase will comprise one or more surfactants dissolved in an oily, hydrophobic liquid immiscible with water and having dissolved therein one or more agents for transferring the uranium through the exterior phase. The oily liquid must, of course, be capable of dissolving both the surfactant and the transfer agent or agents and may be any liquid which is non-reactive and immiscible with both the interior and exterior phases. It is preferred that this liquid comprise one or more aliphatic hydrocarbons and it is particularly preferred that the liquid have a flash point above the operating temperature of the process. Illustrative, but nonlimiting examples of suitable liquids include substantially aliphatic hydrocarbons such as kerosene and paraffinic hydrocarbons such as Norpar 13, SK-100, Low Odor Paraffin Solvent (LOPS) and Solvent Neutral 100 (S-100N) which are available from Exxon Chemical Company. It is understood, of course, that the hydrocarbon may contain one or more

components selected from other hydrocarbons, halogenated hydrocarbons, higher oxygenated compounds such as alcohols, ketones, acids and esters as long as the emulsion is stable and the exterior phase is immiscible with both the aqueous feed solution and aqueous interior phase and permits transferring the uranium from the feed to the interior phase to the emulsion. The exterior phase of the emulsion will contain from about 60-97 weight % of this hydrocarbon liquid, preferably from about 75-95% and most preferably from about 85-95 weight %.

As hereinbefore stated, the oily, water immiscible external phase of the emulsion will contain one or more oil soluble surfactants for forming and stabilizing the emulsion, but which will not prohibit transfer of the uranium through the exterior phase to the interior phase. Suitable surfactants may be selected from among oil soluble anionic and nonionic surfactants. It has been found that the preferred U(IV) transfer agent, OPPA, reacts with certain amine surfactants and neutralizes them, thereby reducing their effectiveness. Consequently, it is preferred not to use an amine or other cationic surfactant that would react with the OPPA.

Surfactants that have been found to be particularly suitable for use in the process of this invention include polyisobutylene succinic anhydride (PIBSA) which is a compound having the general formula:

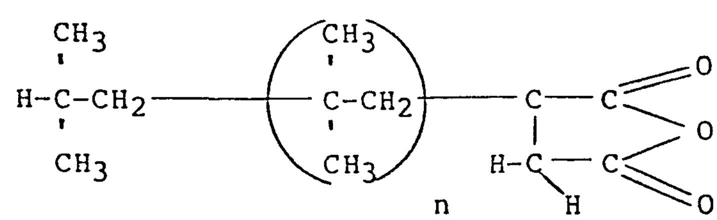

wherein n for the polyisobutylene portion varies from 10 to 60. An illustrative, but nonlimiting example of a particular PIBSA compound which has been found useful as a surfactant in the process of this invention is where n is

40, which gives said compound a molecular weight of about 2,000. This surfactant will generally comprise from about 0.2 to 10 weight % of the exterior phase of the emulsion, preferably from about 0.5 to 7 weight % and still more preferably from about 2-6 weight %.

As hereinbefore stated, the external phase of the emulsion must contain an agent capable of transferring the uranium from the aqueous feed, through the oily external phase to the interior phase. Transfer agents found to be particularly suitable for transferring U(IV) cations through the external phase to the internal phase are oil soluble dialkyl esters of phosphoric acid and trialkylphosphine oxides particularly OPPA.

In general, the transfer agent will comprise from between about 1-30 wt. % of the exterior phase of the emulsion, preferably from about 2-18 wt. % and most preferably from about 2-6 wt. %.

As hereinbefore stated, the interior phase of the emulsion will preferably comprise an aqueous acid solution containing an alkane diphosphonic acid complexing agent of the general formula:

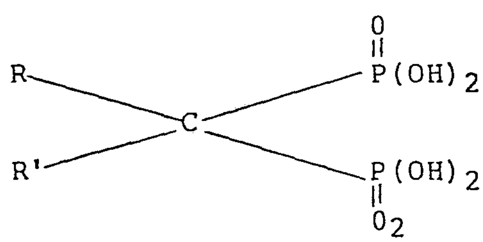

wherein R is hydrogen or a $C_1$ to $C_4$ alkyl group with R' being hydrogen or hydroxyl.

It is preferred that the concentration of phosphoric acid in the internal phase be approximately the same as in the feed in order to avoid excessive swelling and ultimately destruction of the emulsion.

The emulsions used in this invention may be prepared by any of the well known methods. Thus, a solution comprising the components of the oily external phase is mixed with an aqueous solution which will form

BAD ORIGINAL

the interior phase under high shear conditions attained by the use of high speed stirrers, colloid mills, homogenizers, ultrasonic generators, mixing jets, etc.

In a preferred embodiment of this invention, WPPA feed at a temperature of about 60°C containing uranium as U(IV) cations is contacted with a water-in-oil emulsion having an interior phase comprising an aqueous solution in 5 to 6 molar phosphoric acid surrounded by an exterior phase comprising a solution of 2 wt. % OPPA in Low Odor Paraffinic Solvent containing 5 wt. % PIBSA having a saponification number of about 103 as the surfactant. The volume ratio of the WPPA feed to the emulsion will generally range between about 4 to 50 and more preferably between about 10 to 30. The actual ratio will, of course, depend on the concentrations of the uranium in the feed and the final uranium concentration desired in the internal phase. The WPPA may be contacted with the emulsion either, cocurrently, countercurrently, or in a combination thereof, using various means well known in the art to increase the contact area between two fluid streams in liquid/liquid extraction process, such as mechanical agitators including turbomixers, rotating disc contactors, centrifugal contactors, shed rows, liquid/liquid contacting trays, orifices of reduced diameter, packed beds, static mixers, etc. The process can be operated continuously or as a batch process and could be operated in a multiple number of contacting stages cocurrently or countercurrently. During contacting of the fluid streams, the OPPA extracts the U(IV) cations from the WPPA and transfers them through the exterior phase of the emulsion to the interior phase wherein the phosphoric acid strips the uranium from the OPPA. The stripped uranium is complexed with the EHDP in the interior phase, which traps the U(IV) cations in the emulsion, since the OPPA will not re-extract the EHDP-complexed U(IV) cations from the interior phase and transfer them back through the exterior phase to the feed.

After the extraction step, the uranium is recovered by breaking the emulsion and then recovering the uranium from the internal aqueous phase by conventional techniques known to those skilled in the art. The spent emulsion can be broken using various techniques such as electric coalescence, adding emulsion-breaking solvents, heating, a combination of centrifugation and mechanical shear, etc.

The invention will be more readily understood by reference to the working examples set forth below.

EXAMPLES

Example 1

In this example, uranium was removed from a green acid WPPA feed by contacting the feed with a liquid membrane emulsion in a batch extraction apparatus comprising a three liter capacity resin kettle having an inside diameter of 10 centimeters fitted with four 1 cm. verticle baffles and four evenly spaced marine propellers of a diameter of 5.1 cm. The WPPA was produced from calcined, North Carolina phosphate rock and contained 26 wt. % $P_2O_5$ (approximately 5M) and had a uranium content of about 50 g/g as U(IV) ion. 1500 ml of the WPPA was added to the resin kettle and heated to a temperature of 60°C. The liquid membrane emulsion had the following composition: Exterior Phase = 5 wt. % PIBSA having a saponification number of 103, from 2-5 wt. % OPPA and the balance being Low Odor Paraffinic Solvent: Interior Phase = a solution of 6M $H_3PO_4$ containing 1 M/L of EHDP. The Low Odor Paraffinic Solvent (LOPS) is a distillate fraction having a Flash Point of 66°C and contains less than 3% aromatics. LOPS is available from Exxon Chemical Co. USA. The liquid membrane emulsion was prepared in a Waring blender at 1300 rpm for 4 minutes using 333 ml of exterior phase or liquid membrane and 167 ml of the interior, aqueous phase to produce an emulsion having a volume ratio of exterior to interior phase of 2. Various amounts of this emulsion were added to the resin kettle to give a volume ratio of feed/emulsion ranging

from 12/1 to 20/1. The emulsion was dispersed in the WPPA feed by mixing at 600 rpm. Samples of the so-formed dispersion were taken through a stopcock in the bottom of the resin kettle as time progressed. These samples were allowed to separate and both the WPPA phase and emulsion phase were then analyzed for uranium content. Uranium analyses were done using either X-ray fluorescence techniques or by inductively coupled ion plasma emission spectroscopy using a Jerrel-Ash Mark III instrument. The results of this experiment are summarized in Table I. These data clearly demonstrate the process of this invention.

In run No. 1, better than 92% extraction of U(IV) from the WPPA was obtained within 3 minutes of contact. When the treat ratio was increased to 20/1 as in run No. 2, the rate of extraction decreased, but excellent extraction was achieved after 30 minutes.

TABLE I

BATCH LM EXTRACTION OF URANIUM FROM NO. CAROLINA WPPA

| Run No. | Treat Ratio F/E | U Extraction, % at Various Contact Times, Min. 2 | 3 | 5 | 10 | 30 |
|---|---|---|---|---|---|---|
| 1 | 12 | 92 | 94 | 95 | 95 | 92 |
| 2 | 20 | 49 | 57 | 67 | 82 | 90 |

Example 2

This example demonstrates the effect of varying the concentration of the EHDP complexing agent present in the internal phase of the emulsion without the presence of a reducing agent. The feed and procedure were identical to that used in Example 1 with a feed/emulsion volume ratio of 12/1. The emulsion composition and preparation of the emulsion was similar to that in Example 1 with the exception of varying the EHDP concentration in the interior phase and the exterior phase contained 2 wt. %

OPPA. The results of this experiment are set forth in Table II.

TABLE II

| Run No. | EHDP M | U Extraction, % at Various Contact Times, Min. 3 | 5 | 10 | 30 |
|---|---|---|---|---|---|
| 1 | 0.2 | 35 | 36 | 36 | 27 |
| 2 | 0.5 | 66 | 75 | 81 | 74 |
| 3 | 1.0 | 94 | 95 | 95 | 92 |

Example 3

This experiment demonstrates the process of this invention in a continuous system comprising one extraction stage containing three co-current contacting compartments. The contacting stage was a 3 liter cylindrical vessel vertically baffled into three compartments. The vessel contained a single shaft onto which was mounted three propellers, one for each compartment. A green North Carolina WPPA solution containing 47 g/g of uranium as U(IV) ion was preheated to a temperature of 60-70°C and fed into the 3 liter vessel via a peristaltic pump (all fluids were transferred with peristaltic pumps). The LM emulsion cocurrently fed to the 3 liter contacting vessel was the same as that used in Example 1. The volume ratio of WPPA feed to LM emulsion fed into the contacting vessel was 10/1 feed/emulsion.

In the contacting vessel, a dispersion of LM emulsion in the WPPA was formed by the shear of the propellers (600 rpm). The resulting dispersion overflowed into a settler after contacting to allow disengagement and separation of the uranium loaded LM emulsion from the WPPA raffinate phase.

The results of the experiment are contained in Table III and show the excellent extraction of uranium as U(IV) ions that can be achieved using the process of this invention.

TABLE III

One State Continuous LM Extraction of WPPA

| Run No. | Extraction Temp., °C | Contact Time, Min. | Uranium Concentration in Raffinate g/g | Uranium Extraction % |
|---|---|---|---|---|
| 1 | 60 | 14 | 5.3 | 89 |
| 2 | 60 | 22 | 2.5 | 95 |
| 3 | 70 | 22 | 3.3 | 93 |

0067583

CLAIMS:

1. A process for recovering uranium from an aqueous feed solution containing uranium as tetravalent U(IV) cations comprising:

(a) contacting said feed with water-in-oil emulsion comprising (i) an aqueous interior phase containing a uranium complexing agent comprising an alkane diphosphonic acid dispersed in (ii) an oily, surfactant-containing exterior phase immiscible with both the interior phase and said feed, said exterior phase containing at least one transfer agent to transport the U(IV) cations from said feed into the interior phase of the emulsion wherein said uranium complexing agent forms a complex with said U(IV) cations to trap said uranous cations in said interior phase to form a uranium-rich emulsion and a uranium-reduced feed solution;

(b) separating the uranium-rich emulsion from the feed solution; and

(c) recovering uranium from the emulsion.

2. A process according to claim 1 wherein said alkane disphosphonic acid has the formula

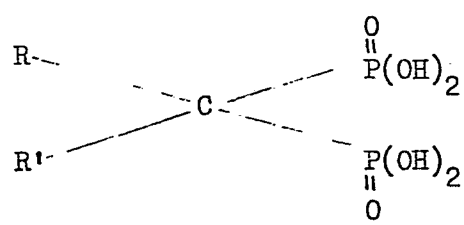

wherein R is a 1 to 4 carbon atom alkane and R' is hydrogen or hydroxyl.

3. A process according to either of claims 1 and 2 wherein said interior phase comprises from about 15 to 80 volume percent of said emulsion.

4. A process according to any one of the preceding claims wherein the amount of complexing agent present in said interior phase ranges from about 0.1 - 1.0M.

5. A process according to any one of the preceding claims wherein said interior phase acid solution comprises a phosphoric acid solution.

6. A process according to any one of the preceding claims wherein said complexing agent comprises EHDA.

7. A process according to any one of the preceding claims wherein said transfer agent comprises OPPA.

8. A process according to any one of the preceding claims wherein the concentration of phosphoric acid in said internal phase is about the same as that in the WPPA.

9. A process according to any one of the preceding claims wherein the surfactant in the external phase comprises PIBSA.

10. A process according to any one of the preceding claims wherein the amount of complexing agent in the internal phase is within the range from about 1/2 - 2 molar.

11. A water-in-oil emulsion comprising an aqueous interior phase comprising an aqueous acid solution containing dissolved therein an alkane diphosphonic acid uranium complexing agent, said interior phase dispersed as microdroplets in a continuous oily, surfactant-containing exterior phase immiscible with said interior phase, said exterior phase containing dissolved therein a uranium ion transfer agent.